# EUROPÄISCHE PATENTSCHRIFT

(11) **EP 3 737 867 B1**
(45) Veröffentlichungstag und Bekanntmachung des Hinweises auf die Patenterteilung: **22.01.2025**
(21) Anmeldenummer: 19718317.1
(22) Anmeldetag: 12.04.2019
(51) Int. Cl.: F15B 21/00, F16L 55/027, F16L 55/04, F04B 11/00

(54) **DÄMPFUNGSVORRICHTUNG**
DAMPING DEVICE
DISPOSITIF AMORTISSEUR

(30) Priorität: 09.05.2018 DE 102018003848
(43) Veröffentlichungstag der Anmeldung: 18.11.2020
(73) Patentinhaber: Hydac Technology GmbH, 66280 Sulzbach (DE)
(72) Erfinder: BALTES, Herbert, 66679 Losheim (DE); KLOFT, Peter, 56235 Ransbach-Baumbach (DE)
(74) Vertreter: Bartels und Partner, Patentanwälte
(86) Internationale Anmeldenummer: PCT/EP2019/059518
(87) Internationale Veröffentlichungsnummer: WO 2019/214903

(56) Entgegenhaltungen:
- CA-A1- 2 488 533
- DE-A1- 102008 015 763
- GB-A- 721 860
- US-A- 1 865 677
- US-A- 2 079 067
- US-A- 4 287 962
- US-A- 997 610
- US-A1- 2017 138 507

## Beschreibung

Die Erfindung betrifft eine Dämpfungsvorrichtung, insbesondere zum Dämpfen oder Vermeiden von Druckstößen, wie Pulsationen, in hydraulischen Versorgungskreisläufen, vorzugsweise in Form eines Silencers, mit den Merkmalen des Oberbegriffs des Anspruchs 1.

Dämpfungsvorrichtungen dieser Art sind Stand der Technik. Solche Hydrodämpfer, auch Schalldämpfer oder Silencer genannt, dienen der Minderung von Schwingungen, die durch Druckpulsationen erzeugt sind, die einem betreffenden Hydrosystem periodisch aufgeprägt werden, insbesondere durch den Betrieb von Hydropumpen. Wie in dem Dokument DE 10 2015 003 016 A1 aufgezeigt, die eine Dämpfungsvorrichtung der eingangs genannten Gattung in Form eines sog. Disc-Silencers offenbart, ist in dem den Dämpfungsraum bildenden kreiszylindrischen, scheibenförmigen Fluidaufnahmeraum, der den Dämpfungsraum bildet, ein vom Fluidstrom anströmbares Leitelement vorgesehen. Dieses ist durch einen Vorsprung gebildet, der mit einer als Deckelteil dienenden Stirnwand einstückig ausgebildet ist und in den Dämpfungsraum auskragend sich bis zu dessen Boden erstreckt. Durch die Anordnung des Leitelements lassen sich eine partielle Erhöhung der Strömungsgeschwindigkeit und eine Verbesserung der Dämpfungseffizienz erreichen.

Die US 2 079 067 A beschreibt eine Dämpfungsvorrichtung, insbesondere zum Dämpfen oder Vermeiden von Druckstößen, wie Pulsationen, in hydraulischen Versorgungskreisläufen, vorzugsweise in Form eines Silencers, mit einem einen Dämpfungsraum umgebenden Dämpfungsgehäuse, das mindestens einen Fluideinlass und mindestens einen Fluidauslass sowie einen zwischen Fluideinlass und Fluidauslass sich erstreckenden Fluidaufnahmeraum aufweist, wobei im Betrieb der Vorrichtung ein Fluidstrom vom Fluideinlass kommend den Dämpfungsraum zum Fluidauslass hin durchquert, wobei sich ein Wandteil des Fluidaufnahmeraums als Leitelement in mindestens einer Ausdehnungsrichtung quer zur Richtung des Fluidstroms zwischen einander gegenüberliegenden Stirnwänden des Dämpfungsgehäuses erstreckt, und wobei im Dämpfungsraum mehrere vom Fluidstrom anströmbare und dessen Strömungsgeschwindigkeit bereichsweise verändernde Leitelemente vorgesehen sind.

Weitere Dämpfungsvorrichtungen gehen aus der DE 10 2008 015 763 A1, der GB 721 860, der CA 2 488 533 A1, der US 2017/0138507 A1, der US 997 610 A, der US 4 287 962 A und der US 1 865 677 A hervor.

Ausgehend von diesem Stand der Technik stellt sich die Erfindung die Aufgabe, eine Dämpfungsvorrichtung der eingangs genannten Gattung zur Verfügung zu stellen, die sich durch ein besonders vorteilhaftes Betriebsverhalten auszeichnet.

Erfindungsgemäß ist diese Aufgabe durch eine Dämpfungsvorrichtung gelöst, die die Merkmale des Patentanspruchs 1 in seiner Gesamtheit aufweist. Gemäß dem kennzeichnenden Teil des Patentanspruchs 1 besteht eine wesentliche Besonderheit der Erfindung darin, dass die durchgehenden Hohlkörper mit einem zylindrischen Mittenteil ausgebildet sind, an das sich endseitig Konen anschließen, die sich jeweils in Richtung der zuordenbaren Stirnwand des Dämpfungsgehäuses erweitern. Bei dem hohen Druckniveau, dem das Dämpfungsgehäuse als Druckbehälter im Betrieb als Silencer häufig ausgesetzt ist, führt die von den Leitelementen gebildete Verbindung zwischen den beiden Stirnwänden des Gehäuses zu einer beträchtlichen Erhöhung der Steifigkeit mit einer besonderen Verbesserung der Druck- und Strukturfestigkeit bei geringem Baugewicht.

Entsprechend der Anzahl der Leitelemente ergeben sich mehrere verteilte Bereiche mit veränderter Strömungsgeschwindigkeit. Daneben führt die verteilte Anordnung von Leitelementen zu einer Aufteilung des Strömungsverlaufs, so dass insgesamt eine erhöhte Dämpfungseffizienz erreichbar ist.

Mit Vorteil können die Leitelemente in Reihen derart zueinander angeordnet sein, dass unter Bildung eines zumindest teilweise mäandernden Fluidstroms zumindest ein Teil der Leitelemente versetzt zu den Leitelementen einer benachbarten Reihe angeordnet ist. Demgemäß wird nicht nur die Strömungsgeschwindigkeit verändert, sondern auch die Grundrichtung des Fluidstroms vom Fluidein- zum Fluidausgang geändert.

Hierbei kann die Anordnung mit Vorteil so getroffen sein, dass die Anzahl der Leitelemente in einer jeweiligen Reihe quer zu der Durchströmungsrichtung vom Fluideinlass kommend in Richtung der größten Querausdehnung des Dämpfungsraums um jeweils ein Leitelement zunimmt und in Richtung des Fluidauslasses von der größten Anzahl kommend um jeweils ein Leitelement abnimmt, bis die Anzahl der Leitelemente in einer Reihe am Fluidein- und -auslass gleich groß ist.

Bei vorteilhaften Ausführungsbeispielen ist das Dämpfungsgehäuse und/oder der Dämpfungsraum kreiszylindrisch oder als Vieleck ausgebildet, wobei die Leitelemente zumindest teilweise, vorzugsweise allesamt, gleich ausgebildet sich zwischen den einander gegenüberliegenden Seitenwänden des Dämpfungsgehäuses erstrecken.

Mit Vorteil können alle Leitelemente, als durchgehende Hohlkörper ausgebildet sein, mit einem zylindrischen Mittenteil, an das sich endseitig Konen anschließen, die sich jeweils in Richtung der zuordenbaren Stirnseite des Dämpfungsgehäuses erweitern. Die Ausbildung der die Stirnwände verbindenden Inserts erhöht die Strukturfestigkeit im Verhältnis zum Baugewicht in besonderem Maße. Durch die Konen ergibt sich eine besonders vorteilhafte Dämpfungssituation im Dämpfungsgehäuse.

Die Anordnung kann hierbei so getroffen sein, dass bei einem mittigen Längsschnitt durch das Dämpfungsgehäuse achteckige Hohlräume gebildet sind, in die angrenzend ein Leitelement hineingestellt ist, und/oder dass bei einem mittigen Querschnitt durch das Dämpfungsgehäuse quer zur Durchströmungsrichtung die Leitelemente zwischen sich sechseckige Hohlräume begrenzen, die jeweils vom Fluidstrom in der Durchströmungsrichtung durchströmt sind.

Die Leitelemente können mit Vorteil so verteilt sein, dass benachbarte Leitelemente an ihren entlang den Konen in die Stirnseiten auslaufenden Enden in geringem Abstand voneinander oder in Berührung miteinander sind.

Bei der Herstellung der Dämpfungsvorrichtung kann mit Vorteil zumindest das Dämpfungsgehäuse mit den Leitelementen, einstückig ausgebildet, in einem 3D-Druckverfahren, vorzugsweise aus Metallwerkstoff, erhalten sein. Des Weiteren sind vorzugsweise auch Fluidein- und -auslass im genannten Druckverfahren erhalten und einstückiger Bestandteil der Dämpfungsvorrichtung als Ganzes.

Nachstehend ist die Erfindung anhand eines in der Zeichnung dargestellten Ausführungsbeispiels im Einzelnen erläutert. Es zeigen:
- Fig. 1: eine perspektivische Schrägansicht des Ausführungsbeispiels der erfindungsgemäßen Dämpfungsvorrichtung;
- Fig. 2: einen gegenüber Fig. 1 vergrößert gezeichneten mittigen Längsschnitt des Dämpfungsgehäuses; und
- Fig. 3: einen der Fig. 2 entsprechenden mittigen Querschnitt durch das Dämpfungsgehäuse.

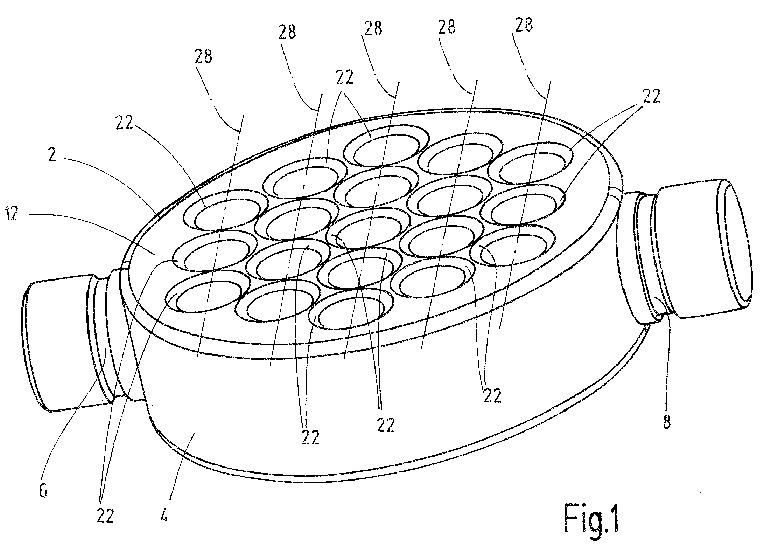

Unter Bezugnahme auf die beiliegenden Zeichnungen ist die erfindungsgemäße Dämpfungsvorrichtung am Beispiel eines sog. Disc-Silencers erläutert, der, wie Fig. 1 zeigt, ein kreiszylinderförmiges Dämpfungsgehäuse 2 aufweist. An zwei diametral einander gegenüberliegenden Stellen sind an der Seitenwand 4 ein Fluideinlass 6 und ein Fluidauslass 8 angeordnet, die die Verbindungen zu einem einen Dämpfungsraum bildenden Fluidaufnahmeraum 10 bilden. Dieser hat die Form einer kreiszylinderförmigen Scheibe zwischen zwei Deck- oder Stirnwänden 12 und 14, die jeweils die Form einer ebenen Kreisscheibe besitzen.

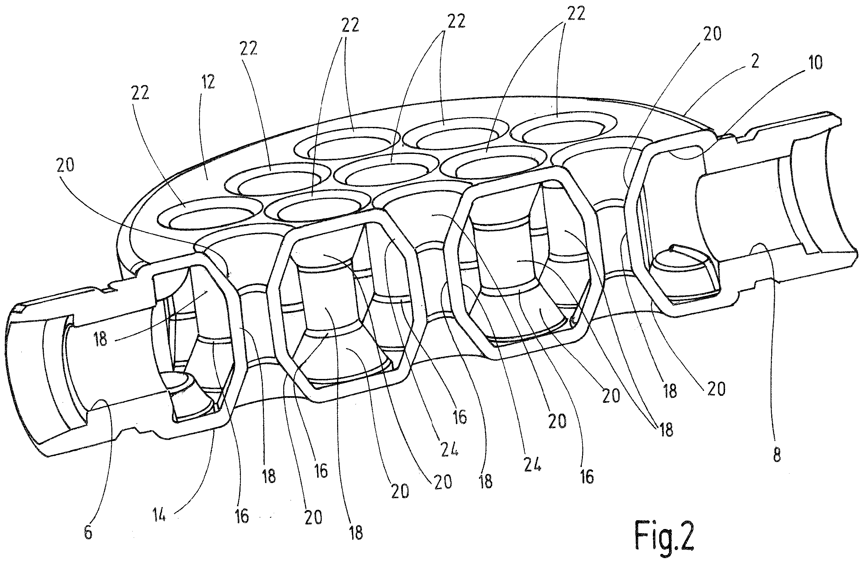

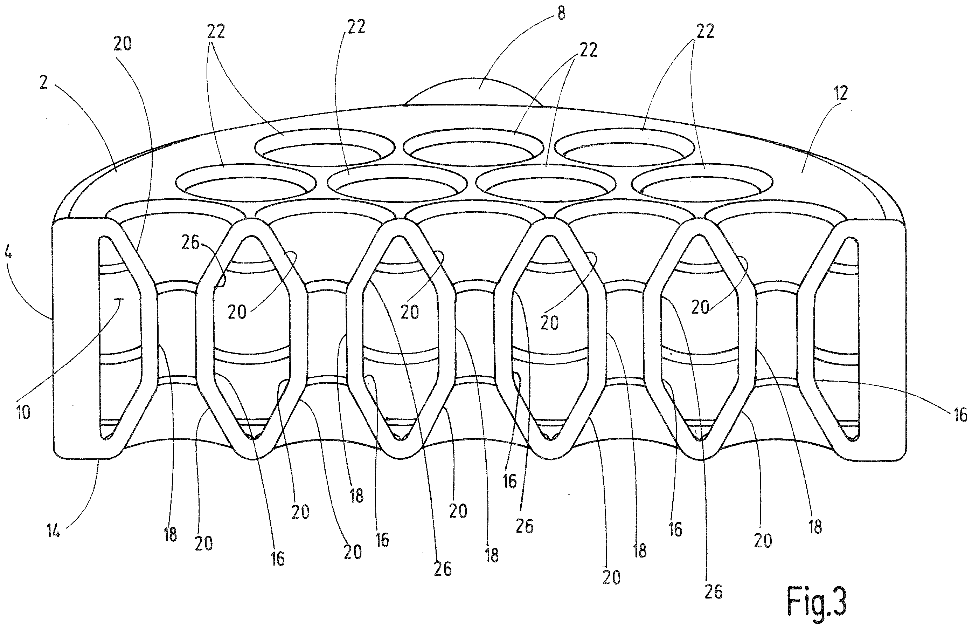

Im Fluidraum 10 befindet sich in dem vom Fluideinlass 6 zum Auslass 8 führenden Strömungsweg eine Mehrzahl von Leitelementen 16, die in einem Muster verteilt angeordnet sind. Wie den Fig. 2 und 3 entnehmbar ist, sind die in der Zeichnung nur teilweise bezifferten Leitelemente 16 durch jeweils einen Hohlkörper gebildet, der einteilig ausgebildet ist und sich von Stirnwand 12 zu Stirnwand 14 erstreckt, wobei die Leitelemente 16 mit der jeweiligen Stirnwand 12, 14 einstückig ausgebildet sind. Die gleich ausgebildeten Hohlkörper der Leitelemente 16 weisen jeweils ein kreiszylindrisches Mittenteil 18 auf, an das sich endseitig je ein Konus 20 anschließt, die sich jeweils in Richtung der zugeordneten Stirnwand 12 bzw. 14 erweitern, in die sie mit ihren Enden 22 (nur teilweise beziffert) übergehen.

Wie die Fig. 1 zeigt, in der von den Leitelementen 16 (nur teilweise beziffert) die Enden 22 der Leitelemente 16 sichtbar sind, handelt es sich bei dem Muster der Leitelemente 16 um eine Reihenanordnung mit Reihen 28 (Fig. 2), die sich geradlinig und zueinander parallel senkrecht zur Verbindungslinie zwischen Fluideinlass 6 und Fluidauslass 8 erstrecken. Von Fluideinlass 6 und von Fluidauslass 8 ausgehend und in Richtung zur Mitte des Dämpfungsraums hin, nimmt die Anzahl der Leitelemente 16 pro Reihe 28 jeweils um ein Leitelement 16 zu. Bei der gezeigten Anordnung mit fünf Reihen 28 und mit drei Leitelementen 16 in der jeweils dem Fluidein- 6 und -auslass 8 nächstgelegenen Reihe 28 ergibt sich für das Muster beim gezeigten Ausführungsbeispiel eine Gesamtanzahl von 19 Leitelementen 16.

Beim gezeigten Beispiel sind die Leitelemente 16 in den Reihen 28 derart angeordnet, dass die Leitelemente 16 einer Reihe 28 gegenüber den Leitelementen der folgenden Reihe 28 jeweils um ein Leitelement 16 versetzt sind und dass die Leitelemente 16 zueinander derart benachbart angeordnet sind, dass ihre jeweils in die zugeordnete Stirnwand 12, 14 übergehenden Enden 22 in geringem Abstand voneinander oder, wie in Fig. 1 gezeigt, miteinander in Berührung sind. Bei dieser Anordnung sind, wie in Fig. 2 gezeigt, bei einem Längsschnitt, der durch das Dämpfungsgehäuse 2 mittig vom Fluideinlass 6 zu Fluidauslass 8 geführt ist, jeweils achteckige Hohlräume 24 zwischen angrenzenden Leitelementen 16 gebildet. Bei einem Querschnitt mit mittig durch das Dämpfungsgehäuse 2 und senkrecht zur Verbindungslinie zwischen Fluideinlass 6 und Fluidauslass 8 verlaufender Schnittebene begrenzen die Leitelemente 16 zwischen sich sechseckige Hohlräume 26, die jeweils vom Fluidstrom in der Haupt-Durchströmungsrichtung durchströmt sind.

Die bei der Erfindung vorgesehene Mehrzahl von Leitkörpern 16 in Form von Hohlkörpern, die mit den Stirnwänden 12 und 14 einstückig sind, eröffnet die Möglichkeit, das Dämpfungsgehäuse 2 trotz leichtgewichtiger Bauweise als Druckbehälter auszubilden, der für ein hohes Druckniveau geeignet ist, wobei die Beeinflussung der Strömung durch die Leitelemente eine effiziente Dämpfung gewährleistet. Mit Vorteil lässt sich das einteilige Dämpfergehäuse 2 mittels eines 3D-Druckverfahrens realisieren.

## Patentansprüche

1. Dämpfungsvorrichtung, insbesondere zum Dämpfen oder Vermeiden von Druckstößen, wie Pulsationen, in hydraulischen Versorgungskreisläufen, vorzugsweise in Form eines Silencers, mit einem einen Dämpfungsraum (10) umgebenden Dämpfungsgehäuse (2), das mindestens einen Fluideinlass (6) und mindestens einen Fluidauslass (8) sowie einen zwischen Fluideinlass (6) und Fluidauslass (8) sich erstreckenden und den Dämpfungsraum (10) bildenden Fluidaufnahmeraum aufweist, wobei im Betrieb der Vorrichtung ein Fluidstrom vom Fluideinlass (6) kommend den Dämpfungsraum (10) zum Fluidauslass (8) hin durchquert, wobei sich ein Wandteil des Fluidaufnahmeraums als Leitelement (16) in mindestens einer Ausdehnungsrichtung quer zur Richtung des Fluidstroms zwischen einander gegenüberliegenden Stirnwänden (12, 14) des Dämpfungsgehäuses (2) erstreckt, und wobei im Dämpfungsraum (10) mehrere vom Fluidstrom anströmbare und dessen Strömungsgeschwindigkeit bereichsweise verändernde Leitelemente (16) vorgesehen sind, wobei zumindest ein Teil der Leitelemente (16) als durchgehende Hohlkörper ausgebildet sind, **dadurch gekennzeichnet, dass** die durchgehenden Hohlkörper mit einem zylindrischen Mittenteil (18) ausgebildet sind, an das sich endseitig Konen (20) anschließen, die sich jeweils in Richtung der zuordenbaren Stirnwand (12, 14) des Dämpfungsgehäuses (2) erweitern.

2. Dämpfungsvorrichtung nach Anspruch 1, **dadurch gekennzeichnet, dass** die Leitelemente (16) in Reihen (28) derart zueinander angeordnet sind, dass unter Bildung eines zumindest teilweise mäandernden Fluidstroms zumindest ein Teil der Leitelemente (16) versetzt zu den Leitelementen (16) einer benachbarten Reihe (28) angeordnet ist.

3. Dämpfungsvorrichtung nach Anspruch 2, **dadurch gekennzeichnet, dass** die Anzahl der Leitelemente (16) in einer jeweiligen Reihe (28) quer zu der Durchströmungsrichtung vom Fluideinlass (6) kommend in Richtung der größten Querausdehnung des Dämpfungsraums (10) um jeweils ein Leitelement (16) zunimmt und in Richtung des Fluidauslasses (8) von der größten Anzahl kommend um jeweils ein Leitelement (16) abnimmt, bis die Anzahl der Leitelemente (16) in einer Reihe (28) am Fluideinlass (6) und -auslass (8) gleich groß ist.

4. Dämpfungsvorrichtung nach einem der vorstehenden Ansprüche, **dadurch gekennzeichnet, dass** das Dämpfungsgehäuse (2) und/oder der Dämpfungsraum (10) kreiszylindrisch oder als Vieleck ausgebildet sind und dass die Leitelemente (16) zumindest teilweise, vorzugsweise allesamt, gleich ausgebildet sich zwischen den einander gegenüberliegenden Stirnwänden (12, 14) des Dämpfungsgehäuses (2) erstrecken.

5. Dämpfungsvorrichtung nach einem der vorstehenden Ansprüche, **dadurch gekennzeichnet, dass** zumindest ein Teil der Leitelemente (16), vorzugsweise alle Leitelemente (16), mit ihren beiden Enden (22) in die jeweils zugeordnete Stirnwand (12, 14) des Dämpfungsgehäuses (2) übergehen.

6. Dämpfungsvorrichtung nach einem der vorstehenden Ansprüche, **dadurch gekennzeichnet, dass** alle Leitelemente (16) als durchgehende Hohlkörper ausgebildet sind mit einem zylindrischen Mittenteil (18), an das sich endseitig Konen (20) anschließen, die sich jeweils in Richtung der zuordenbaren Stirnseite (12, 14) des Dämpfungs-gehäuses (2) erweitern.

7. Dämpfungsvorrichtung nach einem der vorstehenden Ansprüche, **dadurch gekennzeichnet, dass** bei einem mittigen Längsschnitt durch das Dämpfungsgehäuse (2) achteckige Hohlräume (24) gebildet sind, in die angrenzend ein Leitelement (16) hineingestellt ist.

8. Dämpfungsvorrichtung nach einem der vorstehenden Ansprüche, **dadurch gekennzeichnet, dass** bei einem mittigen Querschnitt durch das Dämpfungsgehäuse (2) quer zur Durchströmungsrichtung die Leitelemente (16) zwischen sich sechseckige Hohlräume (26) begrenzen, die jeweils vom Fluidstrom in der Durchströmungsrichtung durchströmt sind.

9. Dämpfungsvorrichtung nach einem der vorstehenden Ansprüche, **dadurch gekennzeichnet, dass** benachbarte Leitelemente (16) an ihren entlang den Konen (20) in die Stirnseiten (12, 14) auslaufenden Enden (22) in geringem Abstand voneinander oder in Berührung miteinander sind.

10. Dämpfungsvorrichtung nach einem der vorstehenden Ansprüche, **dadurch gekennzeichnet, dass** zumindest das Dämpfungsgehäuse (2), mit den Leitelementen (16) einstückig ausgebildet, in einem 3D-Druckverfahren erhalten ist.

## Claims

1. Damping device, in particular for damping or preventing pressure shocks, such as pulsations, in hydraulic supply circuits, preferably in the form of a silencer, with a damping housing (2) surrounding a damping chamber (10), which has at least one fluid inlet (6) and at least one fluid outlet (8) as well as a fluid receiving chamber extending between the fluid inlet (6) and the fluid outlet (8) and forming the damping chamber (10), wherein, during operation of the device, a fluid flow coming from the fluid inlet (6) traverses the damping chamber (10) to the fluid outlet (8), wherein a wall portion of the fluid receiving chamber extends as a guide element (16) in at least one direction of expansion transverse to the direction of the fluid flow between mutually opposing end walls (12, 14) of the damping housing (2), and wherein a plurality of guide elements (16) are provided in the damping chamber (10), which guide elements the fluid flow can impinge upon thereby changing its flow velocity in certain areas, wherein at least some of the guide elements (16) are configured as continuous hollow bodies, **characterised in that** the continuous hollow bodies are formed with a cylindrical central portion (18), to which cones (20) are connected at the ends, which cones each widen in the direction of the assignable end wall (12, 14) of the damping housing (2).

2. Damping device according to claim 1, **characterised in that** the guide elements (16) are arranged in rows (28) with respect to each other, in such a manner that at least some of the guide elements (16) are arranged offset with respect to the guide elements (16) of an adjacent row (28), creating an at least partially meandering fluid flow.

3. Damping device according to claim 2, **characterised in that** the number of guide elements (16) in a particular row (28) increases transverse to the flow-through direction coming from the fluid inlet (6) towards the largest transverse expansion of the damping chamber (10) by one guide element (16) in each case and decreases in the direction of the fluid outlet (8) coming from the largest number by one guide element (16) in each case, until the number of guide elements (16) in a row (28) is equal at the fluid inlet (6) and the fluid outlet (8).

4. Damping device according to one of the preceding claims, **characterised in that** the damping housing (2) and/or the damping chamber (10) is/are configured to be circular-cylindrical or polygonal and **in that** the guide elements (16), at least some of which, preferably all of which, are configured identically, extend between the mutually opposing end walls (12, 14) of the damping housing (2).

5. Damping device according to one of the preceding claims, **characterised in that** at least some of the guide elements (16), preferably all the guide elements (16), merge with both their ends (22) into the respectively assigned end wall (12, 14) of the damping housing (2).

6. Damping device according to one of the preceding claims, **characterised in that** all guide elements (16) are configured as continuous hollow bodies with a cylindrical central portion (18) to which cones (20) are connected at the ends, which cones each widen in the direction of the assignable end face (12, 14) of the damping housing (2).

7. Damping device according to one of the preceding claims, **characterised in that**, in a central longitudinal section through the damping housing (2), octagonal cavities (24) are formed, into which a guide element (16) is adjacently placed.

8. Damping device according to one of the preceding claims, **characterised in that**, in a central cross-section through the damping housing (2) transverse to the flow-through direction, the guide elements (16) define hexagonal cavities (26) between them, through each of which the fluid flow passes in the flow-through direction.

9. Damping device according to one of the preceding claims, **characterised in that** adjacent guide elements (16) are a short distance from one another or in contact with one another at their ends (22) extending along the cones (20) into the end faces (12, 14).

10. Damping device according to one of the preceding claims, **characterised in that** at least the damping housing (2), which is configured in one piece with the guide elements (16), is obtained in a 3D printing process.

## Revendications

1. Dispositif d'amortissement, en particulier pour amortir ou empêcher des coups de bélier comme des pulsations, dans des circuits hydrauliques d'alimentation, de préférence sous la forme d'un silencieux, comprenant un boîtier (2) d'amortissement, qui entoure un espace (10) d'amortissement et qui a au moins une entrée (6) pour du fluide et au moins une sortie (8) pour du fluide, ainsi qu'un espace de réception de fluide s'étendant entre l'entrée (6) pour du fluide et la sortie (8) pour du fluide et formant l'espace (10) d'amortissement,
dans lequel, en fonctionnement du dispositif, un courant de fluide venant de l'entrée (6) pour du fluide traverse l'espace (10) d'amortissement en allant vers la sortie (8) pour du fluide, dans lequel une partie de paroi de l'espace de réception de fluide s'étend, comme élément (16) de conduite, dans au moins une direction d'étendue transversalement à la direction du courant de fluide entre des parois (12, 14) frontales opposées l'une à l'autre du boîtier (2) d'amortissement, et dans lequel il est prévu dans l'espace (10) d'amortissement plusieurs éléments (16) de conduite, dans lesquels le courant de fluide peut passer et qui en modifient par endroits la vitesse d'écoulement, dans lequel
au moins une partie des éléments (16) de conduite sont constitués en corps complètement creux, **caractérisé en ce que** les corps complètement creux sont constitués en ayant une partie (18) médiane cylindrique, à laquelle se raccordent, du côté de l'extrémité, des cônes (20), qui s'élargissent respectivement dans la direction de la paroi (12, 14) frontale, pouvant être associée, du boîtier (2) d'amortissement.

2. Dispositif d'amortissement suivant la revendication 1, **caractérisé en ce que** les éléments (16) de conduite sont disposés en rangées (28) les uns par rapport aux autres, de manière à ce que, en formant un courant de fluide au moins en partie sinueux, une partie des éléments (16) de conduite soit disposée de manière décalée par rapport aux éléments (16) de conduite d'une rangée (28) voisine.

3. Dispositif d'amortissement suivant la revendication 2, **caractérisé en ce que** le nombre des éléments (16) de conduite dans une rangée (28) respective venant de l'entrée (6) pour du fluide transversalement à la direction d'écoulement, augmente, dans la direction de l'étendue transversale la plus grande à l'espace (10) d'amortissement, de respectivement un élément (16) de conduite, et diminue, de respectivement un élément (16) de conduite, venant dans la direction de la sortie (8) pour du fluide du plus grand nombre, jusqu'à ce que le nombre des éléments (16) de conduite soit égal dans une rangée (28) à l'entrée (6) pour du fluide et à la sortie (8) pour du fluide.

4. Dispositif d'amortissement suivant l'une des revendications précédentes, **caractérisé en ce que** le boîtier (2) d'amortissement et/ou l'espace (10) d'amortissement est de constitution cylindrique de section transversale circulaire ou polygonale et **en ce que** les éléments (16) de conduite au moins en partie, de préférence tous ensemble, constitués pareillement, s'étendent entre les parois (12, 14) frontales opposées l'une à l'autre du boîtier (2) d'amortissement.

5. Dispositif d'amortissement suivant l'une des revendications précédentes, **caractérisé en ce qu'**au moins une partie des éléments (16) de conduite, de préférence tous les éléments (16) de conduite, se transforment par leurs deux extrémités (22) en la paroi (12, 14) frontale du boîtier (2) d'amortissement associée respectivement.

6. Dispositif d'amortissement suivant l'une des revendications précédentes, **caractérisé en ce que** tous les éléments (16) de conduite sont constitués en corps complètement creux, ayant une partie (18) médiane cylindrique, à laquelle se raccordent, du côté de l'extrémité, des cônes (20), qui s'élargissent respectivement dans la direction du côté (12, 14) frontal, pouvant être associé, du boîtier (2) d'amortissement.

7. Dispositif d'amortissement suivant l'une des revendications précédentes, **caractérisé en ce que**, dans une coupe longitudinale médiane du boîtier (2) d'amortissement, sont formés des espaces (24) creux octogonaux, dans lesquels, en contiguïté, est mis un élément (16) de conduite.

8. Dispositif d'amortissement suivant l'une des revendications précédentes, **caractérisé en ce que**, dans une section transversale médiane du boîtier (2) d'amortissement, transversalement à la direction d'écoulement, les éléments (16) de conduite délimitent entre eux des espaces (26) creux hexagonaux, dans lesquels passe respectivement du courant de fluide dans la direction d'écoulement.

9. Dispositif d'amortissement suivant l'une des revendications précédentes, **caractérisé en ce que** des éléments (16) de conduite voisins sont, à leurs extrémités (22) sortant dans les côtés (12, 14) frontaux le long des cônes (20), à une distance plus petite les uns des autres ou sont en contact entre eux.

10. Dispositif d'amortissement suivant l'une des revendications précédentes, **caractérisé en ce qu'**au moins le boîtier (2) d'amortissement, d'une seule pièce avec les éléments (16) de conduite, est obtenu dans un procédé d'impression en 3D.
